# EUROPEAN PATENT APPLICATION

(11) **EP 4 525 165 A1**
(43) Date of publication of application: **19.03.2025**
(21) Application number: 23802995.3
(22) Date of filing: 11.05.2023
(51) Int. Cl.: H01M 50/317, H01M 50/35

(54) **BATTERY CELL, BATTERY PACK AND VEHICLE**

(30) Priority: 12.05.2022 CN 202221130529 U
(71) Applicant: BYD Company Limited, Shenzhen, Guangdong 518118 (CN)
(72) Inventor: WANG, Xinyue, Shenzhen, Guangdong 518118 (CN); CHEN, Chong, Shenzhen, Guangdong 518118 (CN); CHENG, Han, Shenzhen, Guangdong 518118 (CN)
(74) Representative: Mathys & Squire
(86) International application number: PCT/CN2023/093498
(87) International publication number: WO 2023/217226

(57) **Abstract**

A battery cell (1), a battery pack (2) and a vehicle (4). The battery cell (1) comprises: a first recess (140) and a plurality of second recesses (150) that are constructed on the inner wall surface of a second side wall (130) and are concave in the direction facing away from an inner cavity (110) the first recess (140) forms an inner main air passage (141) in the inner cavity (110), the plurality of second recesses (150) form a plurality of branch air passages (151) in the inner cavity (110), the plurality of branch air passages (151) are separately communicated with the main air passage (141), the second side wall (130) is provided with an explosion-proof hole (160) corresponding to the position of the main air passage (141); an explosion-proof valve (300) mounted on the second side wall (130); and an electrode core (400) provided in a housing (100) and spaced apart from the explosion-proof hole (160).

## Description

### CROSS-REFERENCE TO RELATED APPLICATIONS

The present disclosure claims priority to Chinese Patent Application No. "202221130529.1" filed by BYD Company Limited on May 12, 2022 and entitled "BATTERY CELL, BATTERY PACK, AND VEHICLE ".

### FIELD

The present disclosure relates to the technical filed of vehicles, and specifically, to a battery cell, a battery pack and a vehicle.

### BACKGROUND

In related art, a terminal post and an explosion-proof valve of a battery cell are generally arranged at the same end. When the battery cell experiences thermal runaway, the ejected high-temperature gas or flame will easily burn the terminal post of the battery cell and devices connected thereto, causing high-voltage arc discharge or secondary harm.

Alternatively, the battery cell is arranged with a boss, the boss protrudes toward the inside of the battery cell, the explosion-proof valve is arranged on the boss, and the explosion-proof valve is spaced apart from the terminal post. However, because an inner cavity and an explosion-proof hole of the battery cell are in poor communication, and the electrode core of the battery cell will directly abut against the boss, the explosion-proof hole is blocked by the electrode core, and the gas inside the battery cell can't be flowed to the outside normally, resulting in a poor explosion-proof effect.

### SUMMARY

The present disclosure aims to solve at least one of the technical problems in the related art. To this end, an object of the present disclosure is to provide a battery cell. The battery cell has the advantages of high safety, smooth gas flow and good explosion-proof effect.

Another object of the present disclosure is to provide a battery pack having the battery cell.

Another object of the present disclosure is to provide a vehicle having the battery cell or the battery pack.

According to an embodiment in a first aspect of the present disclosure, a battery cell includes: a housing, having an inner cavity, and a first side wall and a second side wall opposite to each other, where an inner wall surface of the second side wall is configured with a first recess and multiple second recesses, the first recess and the second recesses are recessed in a direction facing away from the inner cavity, the first recess forms a main gas passage in the inner cavity, the multiple second recesses form multiple branch gas passages in the inner cavity, the multiple branch gas passages are respectively in communication with the main gas passage, and the second side wall is provided with an explosion-proof hole corresponding in position to the main gas passage; a terminal post, where the terminal post is arranged on a wall of the housing other than the second side wall; an explosion-proof valve, where the explosion-proof valve is mounted on the second side wall, and the explosion-proof valve is configured to cover the explosion-proof hole; and an electrode core, where the electrode core is arranged in the housing, and the electrode core is spaced apart from the explosion-proof hole.

The battery cell according to the embodiment of the present disclosure has the advantages of high safety, smooth gas flow and good explosion-proof effect.

According to some exemplary embodiments of the present disclosure, the main gas passage and the multiple branch gas passages are arranged at least in a length direction of the second side wall, and the dimension of the main gas passage in a width direction of the second side wall is greater than the dimension of each of the branch gas passages in the width direction of the second side wall.

According to some exemplary embodiments of the present disclosure, the main gas passage extends along the width direction of the second side wall, each of the branch gas passages extends along the length direction of the second side wall, and the multiple branch gas passages are distributed at two sides of the main gas passage in the length direction of the second side wall.

According to some exemplary embodiments of the present disclosure, multiple branch gas passages are arranged at each side of the main gas passage in the length direction of the second side wall, and the multiple branch gas passages are spaced apart along the width direction of the second side wall; equal number of the branch gas passage are arranged at the two sides of the main gas passage in the length direction of the second side wall; and the branch gas passages at the two sides of the main gas passage in the length direction of the second side wall are arranged in a one-to-one correspondence manner.

According to some exemplary embodiments of the present disclosure, an outer wall surface of the second side wall is configured with a first protrusion. The first protrusion protrudes in a direction facing away from the inner cavity, the first protrusion corresponds in position to the first recess, and the explosion-proof hole penetrates through the first protrusion and the first recess.

According to some exemplary embodiments of the present disclosure, the outer wall surface of the second side wall is configured with multiple second protrusions. Each of the second protrusions protrudes in a direction facing away from the inner cavity, and the multiple second protrusions correspond in position to the multiple second recesses in a one-to-one correspondence manner.

According to some exemplary embodiments of the present disclosure, the first protrusion and the first recess are located at a center of the second side wall in the length direction of the second side wall.

According to some exemplary embodiments of the present disclosure, the depth of the main gas passage ranges from 0.5 mm to 3 mm; and the depth of each of the branch gas passages ranges from 0.5 mm to 3 mm.

According to some exemplary embodiments of the present disclosure, multiple electrode cores are provided, and the multiple electrode core are arranged in sequence. The arrangement direction of the multiple electrode cores is consistent with a thickness direction of the electrode cores. Each of the electrode core at least corresponds to one branch gas passage.

According to some exemplary embodiments of the present disclosure, the dimension of the electrode core in the length direction of the second side wall is L₁, and the maximum length of the first recess and the multiple second recesses on the second side wall is L₂, where L₁ and L₂ meet: 0.04≤L₂/L₁≤0.96.

According to some exemplary embodiments of the present disclosure, L₁ and L₂ further meet: L₁≤500mm, and L₂≥20mm.

According to some exemplary embodiments of the present disclosure, the main gas passage is located at a center of the electrode core in the length direction of the second side wall. The explosion-proof hole is located at a center of the main gas passage, and the explosion-proof hole is located at a center of the electrode core in the thickness direction of the electrode core.

According to some exemplary embodiments of the present disclosure, the battery cell further includes: an insulating film. The insulating film is arranged in the inner cavity, and the insulating film is located between at least a part of the inner cavity and the explosion-proof valve.

According to some exemplary embodiments of the present disclosure, the terminal post includes a positive electrode terminal post and a negative electrode terminal post. The housing is an aluminum housing, the positive electrode terminal post is electrically connected to the housing, and a difference between the voltage of the positive electrode terminal post and the voltage of the housing is not less than 0 V and not greater than 2.5 V.

According to some exemplary embodiments of the present disclosure, the terminal post includes a positive electrode terminal post and a negative electrode terminal post. The housing is a steel housing, the negative electrode terminal post is electrically connected to the housing, and a difference between the voltage of the housing and the voltage of the negative electrode terminal post is not less than 0 V and not greater than 2.5 V.

According to some exemplary embodiments of the present disclosure, the housing includes: a housing body, where the second side wall and the inner cavity are formed on the housing body, the housing body is provided with an opening facing the second side wall, and the opening is in communication with the inner cavity; a housing cover, where the housing cover is mounted to the housing body, the housing cover covers the inner cavity, the first side wall is formed on the housing cover, and the terminal post is connected to the housing cover.

According to an embodiment in a second aspect of the present disclosure, a battery pack includes a box; and the battery cell according to the embodiment in the first aspect of the present disclosure, where the battery cell is mounted in the box, with the explosion-proof valve facing a bottom wall of the box.

The battery pack according to the embodiment in the second aspect of the present disclosure has the advantages of high safety, smooth gas flow and good explosion-proof effect, by using the battery cell.

According to an embodiment in a third aspect of the present disclosure, a vehicle includes the battery cell according to the embodiment in the first aspect of the present disclosure or the battery pack according to the embodiment in the second aspect of the present disclosure, where the first side wall is located above the second side wall.

The vehicle according to the embodiment in the third aspect of the present disclosure has the advantages of high safety, smooth gas flow and good explosion-proof effect, by using the battery cell and the battery pack.

Additional aspects and advantages of the present disclosure will be partly given in the following description, some of which will become apparent from the following description, or may be learned from practices of the present disclosure.

### BRIEF DESCRIPTION OF THE DRAWINGS

The above and/or other additional aspects and advantages of the present disclosure will become apparent and comprehensible from the description of embodiments in connection with accompanying drawings, in which: wherein
FIG. 1 is a schematic structural view of a battery cell according to an embodiment of the present disclosure.
FIG. 2 is a schematic structural view of a battery cell according to an embodiment of the present disclosure viewed from another perspective.
FIG. 3 is a schematic structural view of a battery cell according to an embodiment of the present disclosure viewed from another perspective.
FIG. 4 is a cross-sectional view taken along the line A-A in FIG. 3.
FIG. 5 is a partially enlarged view of an encircled part B in FIG. 4.
FIG. 6 is a cross-sectional view taken along the line C-C in FIG. 3.
FIG. 7 is a partially enlarged view of an encircled part B in FIG. 6.
FIG. 8 is a schematic view of a battery pack according to an embodiment of the present disclosure.
FIG 9 is a schematic view of a vehicle according to an embodiment of the present disclosure.
FIG. 10 is a schematic view of a vehicle according to another embodiment of the present disclosure.

### List of reference numerals:

1 battery cell,
100 housing, 110 inner cavity, 120 first side wall, 130 second side wall, 131 first protrusion, 132 second protrusion, 140 first recess, 141 main gas passage, 150 second recess, 151 branch gas passage, 160 explosion-proof hole, 170 housing body, 180 housing cover,
200 terminal post, 210 positive electrode terminal post, 220 negative electrode terminal post, 300 explosion-proof valve, 400 electrode core, 500 insulating film,
2 battery pack, 3 box, 4 vehicle.

### DETAILED DESCRIPTION

Embodiments of the present disclosure will be described in detail below, and examples thereof are illustrated in the drawings, where the same or similar elements or the elements having the same or similar functions are denoted by the same or similar reference numerals throughout the description. The embodiments described below with reference to the accompanying drawings are exemplary and merely intended to explain the present disclosure, and cannot be construed as a limitation on the present disclosure.

In the descriptions of the present disclosure, it should be understood that the terms "center", "upper", "lower", "front", "rear", "left", "right", "vertical", "horizontal", "top" , "bottom", inner", "outer", and others indicate directional or position relations based on the directional or position relations shown in the drawings, and are merely provided for ease or brevity of description of the present disclosure, but do not necessarily mean or imply that the indicated device or component is provided in the specified direction or constructed or operated in the specified direction. Therefore, such terms should not be construed as limiting of the present disclosure.

It is to be understood that the terms "first" and "second" are used merely for the purpose of description, and shall not be construed as indicating or implying relative importance or implying a quantity of indicated technical features. Therefore, a feature limited by "first" or "second" may explicitly or implicitly include one or more of the features. Further, in the descriptions of the present disclosure, unless otherwise indicated, "multiple" means two or more.

A battery cell 1 according to an embodiment of the present disclosure will be described below with reference to the accompanying drawings.

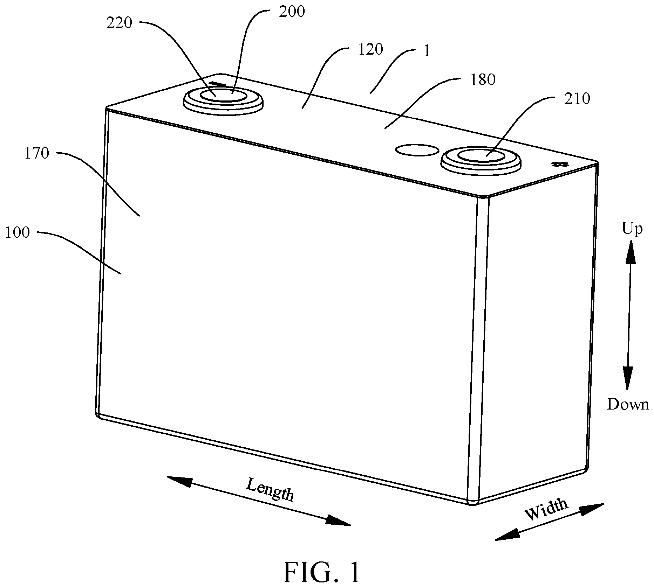

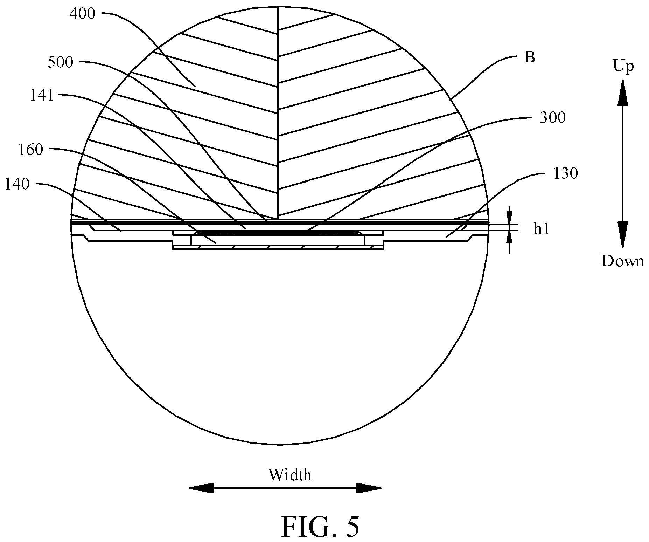

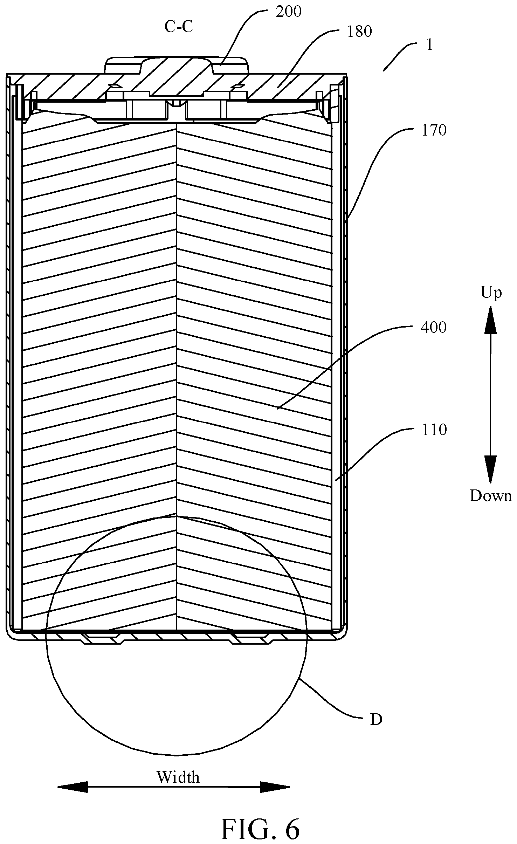

As shown in FIGs. 1 to 7, the battery cell 1 according to the embodiment of the present disclosure includes a housing 100, a terminal post 200, an explosion-proof valve 300, and an electrode core 400.

The housing 100 has an inner cavity 110, and a first side wall 120 and a second side wall 130 opposite to each other. An inner wall surface of the second side wall 130 is configured with a first recess 140 and multiple second recesses 150. The first recess 140 and the second recesses 150 are recessed in a direction facing away from the inner cavity 110. The first recess 140 forms an main gas passage 141 in the inner cavity 110, the multiple second recesses 150 form multiple branch gas passages 151 in the inner cavity 110, and the multiple branch gas passages 151 are respectively in communication with main gas passage 141. The second side wall 130 is provided with an explosion-proof hole 160 corresponding in position to the main gas passage 141. The terminal post 200 is arranged on a wall of the housing 100 other than the second side wall 130, the explosion-proof valve 300 is mounted on the second side wall 130, and the explosion-proof valve 300 is configured to cover the explosion-proof hole 160. The electrode core 400 is arranged in the housing 100, and the electrode core 400 is spaced apart from the explosion-proof hole 160.

The explosion-proof valve 300 has an explosion value. When the pressure in the inner cavity 110 of the battery cell 1 is less than the explosion value of the explosion-proof valve 300, the battery is in a normal working state. When the pressure in the inner cavity 110 is greater than or equal to the explosion value of the explosion-proof valve 300, the explosion-proof valve 300 is opened and the gas is rapidly discharged, to rapidly reduce the pressure in the cavity, and prevent the explosion of the battery cell 1. At this time, the explosion-proof valve 300 serves for explosion protection.

To isolate the explosion-proof valve 300 from the electrolyte solution in the inner cavity 110, an insulating film 500 is further arranged in some embodiments of the present disclosure. The insulating film 500 is arranged in the inner cavity 110, and the insulating film 500 is located between at least a part of the inner cavity 110 and the explosion-proof valve 300. By the insulating film 500, the explosion-proof valve 300 can be isolated from the electrolyte solution, to prevent the corrosion of the explosion-proof valve 300 due to long time of soaking in the electrolyte solution, prevent the battery from leakage, avoid the increase or decrease of the opening pressure of the explosion-proof valve 300 due to the influence of the electrolyte solution, and enable the explosion-proof valve 300 to be in a stable and reliable working state.

For example, the insulating film 500 may be made of polypropylene (PP) polyethylene (PE) or other polyester compounds.

In some embodiments of the present disclosure, the insulating film 500 is spaced apart from a wall of the main gas passage 141 and a wall of the branch gas passages 151, and the insulating film 500 is gas impermeable. When the gas pressure in other parts in the inner cavity 110 than the main gas passage 141 and the branch gas passages 151 is small, the main gas passage 141 and the branch gas passages 151 are not in communication with other parts in the inner cavity 110 than the main gas passage 141 and the branch gas passages 151. When the gas pressure in the inner cavity 110 increases, the insulating film 500 is pressurized to deform, and the gas in other parts in the inner cavity 110 than the main gas passage 141 and the branch gas passages 151 can break through the insulating film 500 and enter the main gas passage 141 and the branch gas passages 151.

In some embodiments of the present disclosure, the insulating film 500 is spaced apart from a wall of the main gas passage 141 and a wall of the branch gas passages 151, and the insulating film 500 is gas permeable. In this case, the main gas passage 141 and the branch gas passages 151 are in communication with other parts in the inner cavity 110 than the main gas passage 141 and the branch gas passages 151, and the gas in other parts in the inner cavity 110 than the main gas passage 141 and the branch gas passages 151 can enter the main gas passage 141 and the branch gas passages 151 through the insulating film 500.

In some embodiments of the present disclosure, the insulating film 500 can be arranged to directly attach to the wall of the main gas passage 141 and the wall of the branch gas passages 151. In this case, the main gas passage 141 and the branch gas passages 151 are in communication with other parts in the inner cavity 110 than the main gas passage 141 and the branch gas passages 151 and the gas in other parts in the inner cavity 110 than the main gas passage 141 and the branch gas passages 151 can directly enter the main gas passage 141 and the branch gas passages 151.

In the battery cell 1 according to the embodiment of the present disclosure, the housing 100 is arranged with the inner cavity 110, and the first side wall 120 and the second side wall 130 opposite to each other, the terminal post 200 is arranged on a wall of the housing 100 other than the second side wall 130, the second side wall 130 is provided with the explosion-proof hole 160 in communication with the main gas passage 141, the explosion-proof valve 300 is mounted on the second side wall 130 and configured to cover the explosion-proof hole (160); and the electrode core 400 is arranged inside the housing 100 and spaced apart from the explosion-proof hole 160. Since the terminal post 200 and the explosion-proof hole 160 are arranged on different side walls of the housing 100 respectively, the terminal post 200 is spaced apart from the explosion-proof hole 160. In the case of thermal runaway of the battery cell 1, the high-temperature gas or flame ejected from the explosion-proof hole 160 will not burn the terminal post 200, to avoid the secondary harm and provide a high safety performance. Moreover, the electrode core 400 is arranged in the housing 100 and spaced apart from the explosion-proof hole 160. In this way, the electrode core 400 will not block the explosion-proof hole 160, and the gas in the inner cavity 110 is in communication with the outside through the explosion-proof hole 160.

In addition, the inner wall surface of the second side wall 130 is configured with the first recess 140 and the multiple second recesses 150 recessed in the direction facing away from the inner cavity 110, It is to be understood that the inner cavity 110 can accommodate the electrode core 400. The first recess 140 and the second recesses 150 are formed by recessing a portion of the second side wall of the housing in related art in a direction away from the first side wall, and the first recess 140 and the multiple second recesses 150 will not reduce the space of the inner cavity 110. Namely, the volume of the inner cavity 110 of the battery cell 1 in the embodiment of the present disclosure is the same as that of the inner cavity of the battery cell in related art. The space in the inner cavity 110 is large enough, and the volume of the electrode core 400 can be large, thus ensuring the energy density of the battery cell 1.

Moreover, the first recess 140 forms the main gas passage 141 in communication with the inner cavity 110, the multiple second recesses 150 form the multiple branch gas passages 151 in communication with the inner cavity 110, and the multiple branch gas passages 151 are respectively in communication with main gas passage 141.

The explosion-proof valve 300 is arranged on the second side wall 130, opposing the terminal post 200. Since the space between the electrode core 400 and the second side wall 130 is small, the gas generated by the electrode core 400 cannot be stored. If the recess is not arranged, the gas generated by the electrode core 400 will move to the space between the electrode core 400 and the first side wall 120. When the pressure in the inner cavity 110 reaches the explosion value of the explosion-proof valve 300, the gas in the inner cavity 110 cannot be quickly exhausted through the explosion-proof hole 160, causing a high hazard.

In the battery cell 1 of the present disclosure, by arranging the first recess 140 and the multiple second recesses 150, the main gas passage 141 and the multiple branch gas passages 151 for storing the gas generated by the electrode core 400 are formed. When the pressure in the inner cavity 110 reaches the explosion value of the explosion-proof valve 300, the explosion-proof valve 300 is opened. A part of the gas generated by the electrode core 400 is stored in the main gas passage 141, and can flow to the explosion-proof hole 160 directly from the main gas passage 141. The other part of gas generated by the electrode core 400 is stored in the branch gas passages 151, and can flow to the main gas passage 141 and the explosion-proof hole 160 from the branch gas passages 151. The structural strength of the second side wall 130 is ensured, to prevent the deformation of the second side wall 130 caused by a too large pressure in the inner cavity 110, avoid the impact on the opening pressure of the explosion-proof valve 160, and promote the normal use of the battery cell 1. Meanwhile, the main gas passage 141 and the multiple branch gas passages 151 can cover a larger area of the second side wall 130, and the gas flows in the main gas passage 141 and the multiple branch gas passages 151 simultaneously, so the gas is exhausted more smoothly. Namely, the gas generated by the electrode core 400 can flow to the explosion-proof hole 160 more quickly through the main gas passage 141 and the multiple branch gas passages 151. The gas in the main gas passage 141 and the multiple branch gas passages 151 can be discharged to the outside of the battery cell 1 more quickly through the explosion-proof hole 160, so the gas flows more smoothly and the explosion-proof effect is better.

Therefore, the battery cell 1 according to the embodiment of the present disclosure has the advantages of high safety, smooth gas flow and good explosion-proof effect.

In some specific embodiments of the present disclosure, the terminal post 200 is arranged on the first side wall 120, and the explosion-proof hole 160 is arranged on the second side wall 130. Namely, the terminal post 200 and the explosion-proof hole 160 are arranged at two opposite sides of the housing 100. In this way, the terminal post 200 and the explosion-proof hole 160 are well spaced apart, and the distance between the terminal post 200 and the explosion-proof hole 160 is large. In the case of thermal runaway of the battery cell 1, the high-temperature gas or flame ejected from the explosion-proof hole 160 will not burn the terminal post 200, to effectively avoid the secondary harm and provide a high safety performance. Moreover, the electrode core 400 will not block the explosion-proof hole 160, and the gas in the first gas channel 510 is communication with the outside through the explosion-proof hole 160.

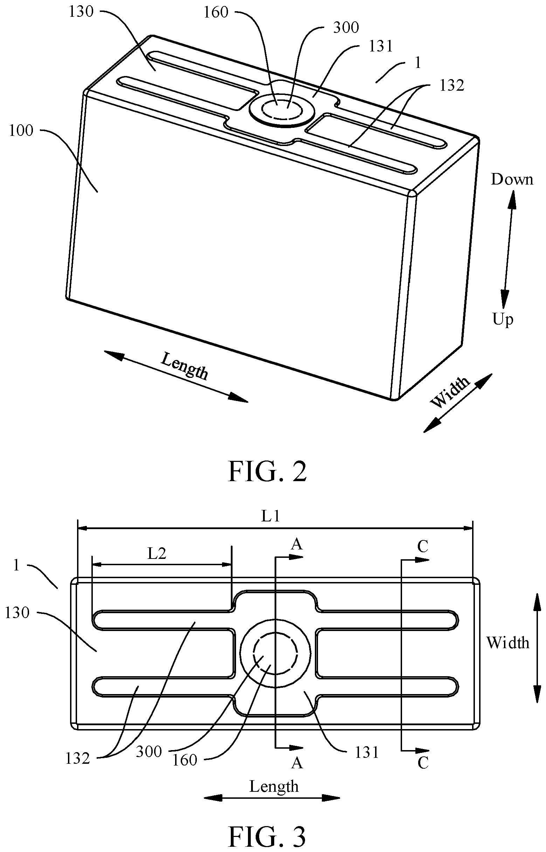

In some specific embodiments of the present disclosure, as shown in FIGs. 2 and 3, the main gas passage 141 and the multiple branch gas passages 151 are arranged at least in a length direction of the second side wall 130. As such, the main gas passage 141 and the multiple branch gas passages 151 cover a larger area of the second side wall 130 in the length direction. In the case of thermal runaway, the gas generated by the electrode core 400 can flow to the outside of the battery cell 1 more quickly through the main gas passage 141 and the multiple branch gas passages 151.

Moreover, the dimension of the main gas passage 141 in a width direction of the second side wall 130 is greater than the dimension of each of the branch gas passages 151 in the width direction of the second side wall 130. By setting a large dimension of the main gas passage 141 in the width direction, each side of the main gas passage 141 on the second side wall 130 can be connected with multiple branch gas passages 151, and the communication between the branch gas passages 151 and the main gas passage 141 is more convenient. Moreover, the cross-sectional area of the main gas passage 141 can be larger, enabling smooth flow.

In some specific embodiments of the present disclosure, as shown in FIGs. 2 and 3, the main gas passage 141 extends along the length direction of the second side wall 130. Each of the branch gas passages 151 extends along the length direction of the second side wall 130 and the multiple branch gas passages 151 are distributed at two sides of the main gas passage 141 in the length direction of the second side wall 130.

Therefore, the main gas passage 141 can cover a larger area in the width direction of the second side wall 130, to further improve the exhaust effect of the electrode core 400. In addition, multiple branch gas passages 151 are arranged at each side of the main gas passage 141 in the length direction of the second side wall 130, and the multiple branch gas passages 141 and the main gas passage 151 can cover an area as large as possible in the length direction of the second side wall 130. The arrangement is wider and has basically no blind angle, to further improve the flow rate of the gas in the main gas passage 141 and the branch gas passages 151 when the electrode core 400 experiences thermal runaway. Therefore, the explosion-proof effect of the battery cell 1 is much better.

In some specific embodiments of the present disclosure, as shown in FIGs. 2 and 3, multiple branch gas passages 151 are arranged at each side of the main gas passage 141 in the length direction of second side wall 130, and the multiple branch gas passages 151 are spaced apart along the width direction of the second side wall 130. Equal number of the branch gas passages 151 are arranged at the two sides of the main gas passage 141 in the length direction of the second side wall 130. The branch gas passages 151 at the two sides of the main gas passage 141 in the length direction of the second side wall 130 are arranged in a one-to-one correspondence manner.

In other words, the multiple branch gas passages 151 are arranged symmetrically with respect to the main gas passage 141, and extend along the length direction of the second side wall 130. The multiple branch gas passages 151 located at each side of the main gas passage 141 covers the same area of the electrode core 400, and the gas flows at two sides of the main gas passage 141 have good consistency, to avoid the problem that the flow of gas is fast at one side of the main gas passage 141 and blocked at the other side of the main gas passage 141.

For example, in the length direction of the second side wall 130, two branch gas passages 151 can be arranged at each side of the main gas passage 141. By means of this, the total volume of the branch gas passages 151 is increased, the gas flows faster, the setting of too many branch gas passages 151 is improved, the structural strength of the second side wall 130 is higher, and the second side wall 130 can support the electrode core 400 more reliably. Definitely, in the length direction of the second side wall 130, the number of the branch gas passages 151 at each side of the main gas passage 141 can be increased according to the number of the electrode cores 400, whereby the gas generated by the electrode core 400 can be quickly collected to the positions of the main gas passage 141 and the explosion-proof hole 160.

In some specific embodiments of the present disclosure, as shown in FIGs. 2 and 3, an outer wall surface of the second side wall 130 is configured with a first protrusion 131. The first protrusion 131 protrudes in a direction facing away from inner cavity 110, and the first protrusion 131 corresponds in position to the first recess 140.

Namely, corresponding to a portion of the first recess 140 recessed in the direction away from the inner cavity 110, the first protrusion 131 protrudes in the direction away from the inner cavity 110. In this way, the thickness of the second side wall 130 at the first recess 140 and the first protrusion 131 can be large, which improves the structural strength of the second side wall 130 and makes the overall structural strength of the housing 100 higher.

Moreover, the explosion-proof hole 160 may penetrate the first recess 140 and the first protrusion 131 in a direction perpendicular to the second side wall 130, to bring the inner cavity 110 of the battery cell 1 into communication with the outside. The extending length of the explosion-proof hole 160 can be the same as the thickness of the second side wall 130. That is, the length of the explosion-proof hole 160 can be shorter, so that the structure is much simple, and the gas is guided to flow more quickly.

In some specific embodiments of the present disclosure, as shown in FIGs. 2 to 7, the outer wall surface of the second side wall 130 is configured with multiple second protrusions 132. Each of the second protrusions 132 protrudes in a direction facing away from the inner cavity 110, and the multiple second protrusions 132 correspond in position to the multiple second recesses 150 in a one-to-one correspondence manner.

Namely, corresponding to a portion of the second recess 150 recessed in the direction away from the inner cavity 110, the second protrusion 132 protrudes in the direction away from the inner cavity 110. As a result, the thickness of the second side wall 130 at the second recess 150 and the second protrusion 132 may be large, which improves the structural strength of the second side wall 130 and makes the overall structural strength of the housing 100 higher.

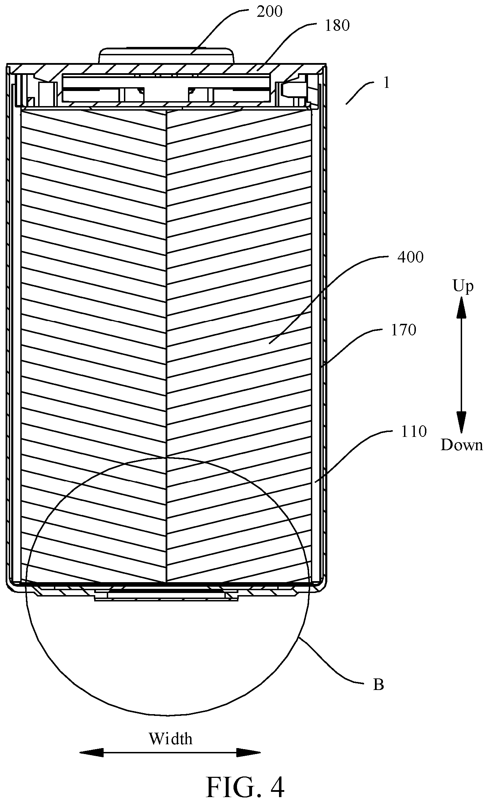

In some specific embodiments of the present disclosure, as shown in FIGs. 4 to 7, the thickness of the second side wall 130 at the first protrusion 131 and the first recess 140 is the same as that at other positions. The thickness of the second side wall 130 at each of the second protrusions 132 and the second recess 150 corresponding thereto is the same as that at other positions.

Therefore, this ensures the thickness consistency of the second side wall 130, makes the thickness of the second side wall 130 more uniform, avoids the occurrence of uneven local thickness of the second side wall 130 and further improves the structural strength of the second side wall 130, so the second side wall 130 can support the electrode core 400 more reliably, and the overall structural strength of the housing 100 is much higher.

In some specific embodiments of the present disclosure, as shown in FIGs. 2 to 7, the first protrusion 131 and the first recess 140 are located at a center of the second side wall 130 in the length direction of the second side wall 130.

It can be understood that the electrode core 400 of the battery cell 1 generates gas. By arranging the first protrusion 131 and the first recess 140 at the center of the second side wall 130 in the length direction, the main gas passage 141 can be located at a center of the electrode core 400 in the length direction. The gas generated by the electrode core 400 can enter the main gas passage 141 more easily. Moreover, the distances from the main gas passage 141 to two ends of the second side wall 130 in the length direction are the same, and the distances from the gas generated by the two ends of the electrode core 400 in the length direction of the second side wall 130 to the main gas passage 141 are the same. There will be no situation that the gas at one side is difficult to enter the main gas passage 141, making the exhaust of gas in the battery cell 1 smoother.

In addition, such an arrangement makes the structure of the housing 100 symmetrical in the length direction of the second side wall 130 and the housing 100 have the same structural strength at two ends of the second side wall 130 in the length direction. This is beneficial to maintaining the consistency in structural strength of the housing 100, and greatly simplifies the structure of the housing 100, thus bringing great convenience to the processing.

In some specific embodiments of the present disclosure, the battery cell 1 further includes a protective sheet (not shown). The protective sheet is connected to the housing 100 and located at a side of the explosion-proof valve 300 facing away from the inner cavity 110.

The protective sheet can shield the explosion-proof valve 300. Whether the explosion-proof valve 300 is mounted at the side of the explosion-proof hole 160 facing the inner cavity 110 or at the side of the explosion-proof hole 160 facing away from the inner cavity 110, the protective sheet can prevent other parts of the vehicle from direct contact with the explosion-proof valve 300. Moreover, the protective sheet can also protect the explosion-proof valve 300 during the transportation of the battery cell 1, to avoid the damage to the explosion-proof valve 300 due to bumps during transportation, and extend the service life of the battery cell 1.

In some specific embodiments of the present disclosure, the depth hi of the main gas passage 141 ranges from 0.5 mm to 3 mm, and the depth h₂ of each of the branch gas passages 151 ranges from 0.5 mm to 3 mm. For example, the depth hi of the main gas passage 141 may be 0.5 mm, 1 mm, 1.5 mm, 2 mm, 2.5 mm or 3 mm, and the depth h₂ of each of the branch gas passages 151 may be 0.5 mm, 1 mm, 1.5 mm, 2 mm, 2.5 mm or 3 mm.

Therefore, the depth hi of the main gas passage 141 and the depth h₂ of the branch gas passages 151 are large, so the space in the main gas passage 141 and the space in the branch gas passages 151 are large, to accommodate more gas and allow the gas generated by the electrode core 400 to be quickly exhausted for explosion protection. Accordingly, the gas flows more smoothly and the explosion-proof effect is better. Moreover, the depth hi of the main gas passage 141 and the depth h₂ of the branch gas passages 151 can be avoided to be too large, so the space occupied by the main gas passage 141 and the branch gas passages 151 in the battery cell 1 will not be too large, to avoid large loss of the capacity of the electrode core 400, and allow the battery cell 1 to have a small volume while ensuring that the battery cell 1 has a high energy density.

In some specific embodiments of the present disclosure, as shown in FIG. 3, multiple electrode cores 400 are provided, and the multiple electrode cores 400 are arranged in sequence. The arrangement direction of the electrode cores 400 is consistent with a thickness direction of electrode core 400, and each of the electrode cores 400 at least corresponds to one branch gas passage 151. 2, 4 or other even number of electrode cores 400 can be provided.

For example, each electrode core 400 may correspond to a corresponding branch gas passage 151 at two sides of the main gas passage 141, whereby each electrode core 400 is ensured to have a branch gas passage 151 to guide the gas generated by portions at two sides of the main gas passage 141, so the exhaust rate of the battery cell 1 is further improved, the explosion-proof effect is better and the battery cell 1 has a high safety performance.

In some specific embodiments of the present disclosure, as shown in FIG. 3, the dimension of the electrode core 400 in the length direction of the second side wall 130 is L₁, and the maximum length of the first recess 140 and the multiple second recesses 150 on the second side wall 130 is L₂, where L₁ and L₂ meet: 0.04≤L₂/L₁≤0.96. For example, L₂/L₁ may be 0.04, 0.1, 0.2, 0.3, 0.4, 0.5, 0.6, 0.7, 0.8. 0.9, or 0.96.

In this way, the dimension of the first recess 140 or the second recess 150 in the length direction of the second side wall 130 is avoided to be too small, so the dimension of the first recess 140 and the second recess 150 in the length direction of the second side wall 130 is large, the main gas passage 141 and the branch gas passages 151 have a large space, and the gas can be exhausted freely, Moreover, the dimension of the first recess 140 and the second recess 150 in the length direction of the electrode core 400 is avoided to be too large, so other portions of the second side wall 130 than the first recess 140 and the second recess 150 can have a large dimension. These portions can stably support the electrode core 400, to avoid the contact of the electrode core 400 with the bottom wall of the first recess 140 and the bottom wall of the second recess 150, and ensure the normal flow of the gas in the main gas passage 141 and the branch gas passages 151.

Further, as shown in FIG. 3, the dimension Li of the electrode core 400 in the length direction of the second side wall 130 is ≤500 mm, and the maximum length L₂ of the first recess 140 and the multiple second recesses 150 on the second side wall 130 is ≥20 mm.

In this way, the length of the electrode core 400 will not be too large, such that the whole length of the battery cell 1 will not be too large, thus improving the overall structural strength of the battery cell 1. In addition, the length of the first recess 140 and the length of the multiple second recesses 150 are not too short. Accordingly, the length of the main gas passage 141 and the branch gas passages 151 is ensured to be enough, the main gas passage 141 and the branch gas passages 151 have a much large space, and the gas is exhausted more smoothly.

In some specific embodiments of the present disclosure, as shown in FIGs. 2 and 3, the main gas passage 141 is located at a center of the electrode core 400 in the length direction of the second side wall 130. In this way, the main gas passage 141 may correspond to the center of the electrode core 400. Therefore, the gas generated by the electrode core 400 can enter the main gas passage 141 more easily, making the exhaust of gas in the battery cell 1 smoother. Moreover, the second side wall 130 has the same dimension in its length direction at two sides of the main gas passage 141. Namely, the second side wall 130 has consistent structural strength at two ends in the length direction, whereby the second side wall 130 can support the electrode core 400 more stably and reliably.

Moreover, the explosion-proof hole 160 is located at a center of the main gas passage 141, and the explosion-proof hole 160 is located at a center of the electrode core 400 in the thickness direction of the electrode core 400.

For example, the explosion-proof hole 160 can be located at the center of the electrode core 400 in the thickness direction, and at the center of the electrode core 400 in the length direction of the second side wall 130. Generally, the gas is mostly generated at the center of the electrode core 400. By arranging the explosion-proof hole 160 at the center of the electrode core 400, the explosion-proof valve 300 can more effectively sense the gas pressure in the battery cell 1. When the gas pressure in the battery cell 1 is too high, the explosion-proof valve 300 can be immediately opened to exhaust the gas in the battery cell 1, thereby further improving the explosion-proof effect of the battery cell 1.

In some specific embodiments of the present disclosure, as shown in FIG. 1, the terminal post 200 includes a positive electrode terminal post 210 and a negative electrode terminal post 220. The housing 100 is an aluminum housing. In this case, the explosion-proof valve 300 is made of aluminum, the positive electrode terminal post 210 is electrically connected to the housing 100, and a difference between the voltage of the positive electrode terminal post 210 and the voltage of the housing 100 ranges from 0 V to 2.5V. The difference between the voltage of the positive electrode terminal post 210 and the voltage of the housing 100 refers to a value obtained by the voltage of the positive electrode terminal post 210 minus the voltage of the housing 100.

It is to be understood that the housing 100 and the explosion-proof valve 300 can be made of metal aluminum or an aluminum alloy, and the electrolyte solution in the battery cell 1 is usually a lithium ion electrolyte solution. Aluminum will react with lithium ions at a low potential to form a metal compound. If the voltage difference between the positive electrode terminal post 210 and the housing 100 is small, the voltage of the housing 100 will approximate the voltage of the positive electrode terminal post 210, that is, the potential of the housing 100 is increased. By means of this, the housing 100 and the explosion-proof valve 300 are prevented from being corroded by the lithium ion electrolyte solution, and the housing 100 and the explosion-proof valve 300 mounted on the housing 100 are protected, thus further preventing the housing 100 and the explosion-proof valve 300 from being corroded, and prolonging the service life of the battery cell 1.

Further, a resistor is connected between the positive electrode terminal post 210 and the housing 100. Therefore, even if the positive electrode terminal post 210 and the housing 100 of the battery cell 1 form a loop, for example, when the positive electrode terminal post 210 of the battery cell 1 is connected to a negative electrode of a battery without a resistor and the housing 100 is connected to a positive electrode of the battery, the resistor between the positive electrode terminal post 210 and the housing 100 of the battery cell 1 can protect the battery cell 1, to avoid the short circuit of the battery cell 1, and enable the battery cell 1 to have a high safety performance during use.

In some specific embodiments of the present disclosure, as shown in FIG. 1, the terminal post 200 includes a positive electrode terminal post 210 and a negative electrode terminal post 220. The housing 100 is a steel housing. In this case, the explosion-proof valve 300 may be made of steel. The negative electrode terminal post 220 is electrically connected to the housing 100, and a difference between the voltage of the housing 100 and the voltage of the negative electrode terminal post 220 ranges from 0V to 2.5V. The difference between the voltage of the housing 100 and the voltage of the negative electrode terminal post 220 refers to a value obtained by the voltage of the housing 100 minus the voltage of the negative electrode terminal post 220.

It is to be understood that steel will react with lithium ions at a high potential to form a metal compound. If the voltage difference between the negative electrode terminal post 220 and the housing 100 is small, the voltage of the housing 100 will approximate the voltage of the negative electrode terminal post 220, that is, the potential of the housing 100 is reduced. By means of this, the housing 100 and the explosion-proof valve 300 are prevented from being corroded by the lithium ion electrolyte solution, and the housing 100 and the explosion-proof valve 300 mounted on the housing 100 are protected, thus further preventing the housing 100 and the explosion-proof valve 300 from being corroded, and prolonging the service life of the battery cell 1.

Further, a resistor is connected between the negative electrode terminal post 220 and the housing 100. In this way, even if the negative electrode terminal post 220 and the housing 100 of the battery cell 1 form a loop, for example, when the negative electrode terminal post 220 of the battery cell 1 is connected to a positive electrode of a battery without a resistor and the housing 100 is connected to a negative electrode of the battery, the resistor between the negative electrode terminal post 220 and the housing 100 of the battery cell 1 can protect the battery cell 1, to avoid the short circuit of the battery cell 1, and enable the battery cell 1 to have a high safety performance during use.

In some specific embodiments of the present disclosure, as shown in FIGs. 1 and 2, the housing 100 includes a housing body 170 and a housing cover 180. The housing 100 may be made of an aluminum alloy.

The second side wall 130 and the inner cavity 110 are formed on the housing body 170, the housing body 170 is provided with an opening facing second side wall 130, and the opening is in communication with the inner cavity 110. The housing cover 180 is mounted to the housing body 170 and the housing cover 180 covers the inner cavity 110. The first side wall 120 is formed on the housing cover 180, and the terminal post 200 is connected to the housing cover 180. By configuring the housing 100 to include separate components, the processing difficulty of the housing 100 is reduced, to simplify the processing steps of the housing body 170 and the housing cover 180, and make the processing more convenient; and it is convenient to put the electrode core 400 and the electrolyte solution into the inner cavity 110. During assembly, the electrode core 400 is put into the inner cavity 110 through the opening, and then the opening is covered by the housing cover 180, to seal the inner cavity 110 and protect the electrode core 400 of the battery cell 1.

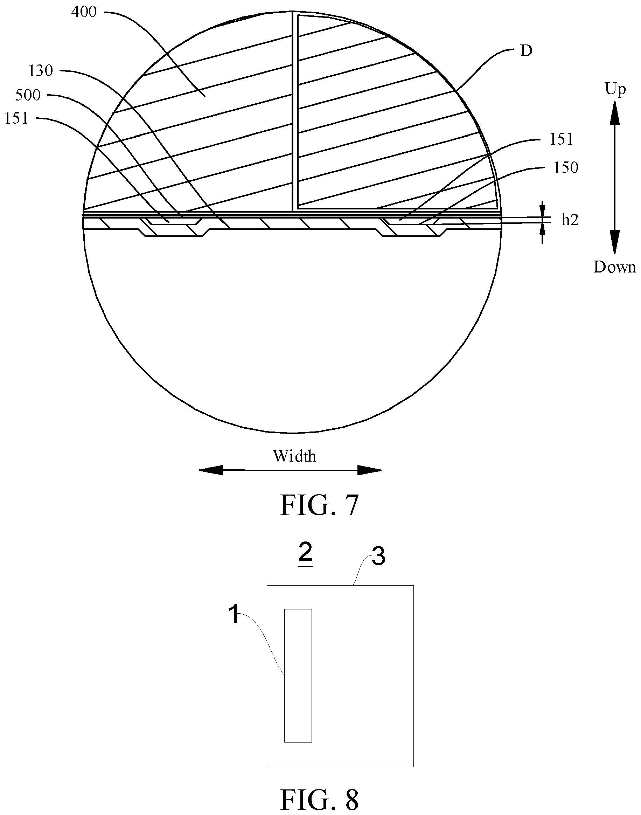

As shown in FIG. 8, a battery pack 2 according to an embodiment of the present disclosure includes a box 3 and the battery cell 1 according to the embodiment in the first aspect of the present disclosure. The battery cell 1 is mounted in the box body 3, with the explosion-proof valve 300 facing a bottom wall of the box body 3. In this way, in the case of thermal runaway of the battery cell 1, high-temperature gas or flame can be ejected through the explosion-proof valve 300 to the bottom of the box 3.

The battery pack 2 according to the embodiment of the present disclosure has the advantages of high safety, smooth gas flow and good explosion-proof effect, by using the battery cell 1.

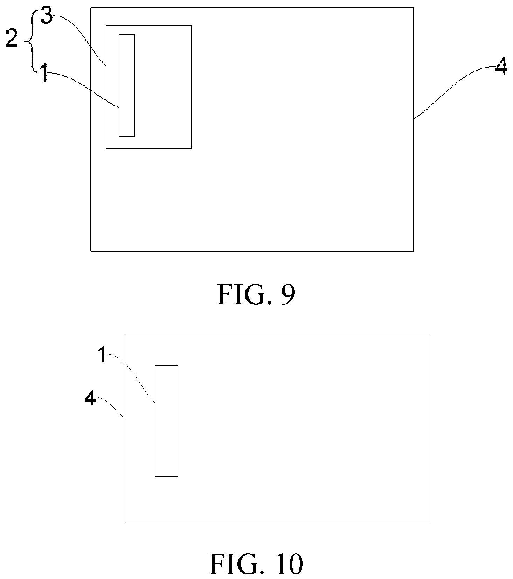

As shown in FIGs. 9 and 10, a vehicle 4 according to an embodiment of the present disclosure includes the battery cell 1 according to the embodiment in the first aspect of the present disclosure or the battery pack 2 according to the embodiment in the second aspect of the present disclosure. The battery pack 2 is mounted to a vehicle body of the vehicle 4 or a chassis of the vehicle 4 by means of the box 3. Alternatively, the vehicle 4 includes the battery cell 1 according to the embodiment in the first aspect of the present disclosure, where the battery cell 1 is mounted to the vehicle body of the vehicle 4 or the chassis of the vehicle 4. That is, the battery cell 1 can be directly mounted to the vehicle body of the vehicle 4 or the chassis of the vehicle 4. Alternatively, the battery cell 1 is mounted in the box 3 and assembled into the battery pack 2, and the battery pack 2 is mounted to the vehicle body of the vehicle 4 or the chassis of the vehicle 4 by means of the box 3.

The vehicle 4 according to the embodiment of the present disclosure has the advantages of high safety, smooth gas flow and good explosion-proof effect, by using the battery cell 1 or the battery pack.

In some specific embodiments of the present disclosure, the battery cell 1 or the battery pack 2 is mounted to the vehicle body of the vehicle 4 or the chassis of the vehicle 4, and with the first side wall 120 located above the second side wall 130.

Particularly, the first side wall 120 may face the interior of the vehicle 4, and the second side wall 130 may face the exterior of the vehicle 4. Namely, the explosion-proof valve 300 may face away from the passenger compartment of the vehicle 4. When the battery cell 1 experiences thermal runaway, high-temperature gas or flame can be ejected through the explosion-proof valve 300 in a direction away from the passenger compartment of the vehicle 4, thereby preventing the flame from being directly ejected into the car, thus reducing the probability of injury of passengers in the vehicle, and further protecting the safety of the passengers in the vehicle.

Other configurations and operations of the battery cell 1, the battery pack 2, and the vehicle 4 according to the embodiments of the present disclosure are known to those of ordinary skill in the art and will not be described in detail herein.

In the description of the specification, the description with reference to the terms "an embodiment", "some embodiments", "exemplary embodiments", "example", "specific example", or "some examples" and so on means that specific features, structures, materials or characteristics described in connection with the embodiment or example are embraced in at least one embodiment or example of the present disclosure. In the specification, exemplary descriptions of the foregoing terms do not necessarily refer to the same embodiment or example. In addition, the described specific features, structures, materials or characteristics may be combined in any suitable manner in one or more embodiments.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. A battery cell (1), comprising:
a housing (100), the housing (100) having an inner cavity (110) and a first side wall (120) and a second side wall (130) opposite to each other, an inner wall surface of the second side wall (130) being configured with a first recess (140) and a plurality of second recesses (150), the first recess (140) and the second recesses (150) being recessed in a direction facing away from the inner cavity (110), the first recess (140) forming a main gas passage (141) in the inner cavity (110), the plurality of second recesses (150) forming a plurality of branch gas passages (151) in the inner cavity (110), the plurality of branch gas passages (151) being respectively in communication with the main gas passage (141), and the second side wall (130) being provided with an explosion-proof hole (160) corresponding in position to the main gas passage (141);
a terminal post (200), the terminal post (200) being arranged on a side wall of the housing (100) other than the second side wall (130);
an explosion-proof valve (300), the explosion-proof valve (300) being mounted on the second side wall (130), and the explosion-proof valve (300) being configured to cover the explosion-proof hole (160); and
an electrode core (400), the electrode core (400) being arranged in the housing (100), and the electrode core (400) being spaced apart from the explosion-proof hole (160).

2. The battery cell (1) according to claim 1, wherein the main gas passage (141) and the plurality of branch gas passages (151) are arranged at least in a length direction of the second side wall (130), and a dimension of the main gas passage (141) in a width direction of the second side wall (130) is greater than a dimension of each of the branch gas passages (151) in the width direction of the second side wall (130).

3. The battery cell (1) according to claim 1 or 2, wherein the main gas passage (141) extends along the width direction of the second side wall (130), each of the branch gas passages (151) extends along the length direction of the second side wall (130), and the plurality of branch gas passages (151) are distributed at two sides of the main gas passage (141) in the length direction of the second side wall (130).

4. The battery cell (1) according to any one of claims 1 to 3, wherein a plurality of branch gas passages (151) are arranged at each side of the main gas passage (141) in the length direction of the second side wall (130), and the plurality of branch gas passages (151) are spaced apart along the width direction of the second side wall (130);
equal number of the branch gas passages (151) are arranged at the two sides of the main gas passage (141) in the length direction of the second side wall (130); and
the branch gas passages (151) at the two sides of the main gas passage (141) in the length direction of the second side wall (130) are arranged in a one-to-one correspondence manner.

5. The battery cell (1) according to any one of claims 1 to 4, wherein an outer wall surface of the second side wall (130) is configured with a first protrusion (131), the first protrusion (131) protrudes in a direction facing away from the inner cavity (110), the first protrusion (131) corresponds in position to the first recess (140), and the explosion-proof hole (160) penetrates through the first protrusion (131) and the first recess (140).

6. The battery cell (1) according to claim 5, wherein the outer wall surface of the second side wall (130) is configured with a plurality of second protrusions (132), each of the second protrusions (132) protrudes in a direction facing away from the inner cavity (110), and the plurality of second protrusions (132) correspond in position to the plurality of second recesses (150) in a one-to-one correspondence manner.

7. The battery cell (1) according to claim 6, wherein the first protrusion (131) and the first recess (140) are located at a center of the second side wall (130) in the length direction of the second side wall (130).

8. The battery cell (1) according to any one of claims 1 to 7, wherein the depth of the main gas passage (141) ranges from 0.5 mm to 3 mm; and
the depth of each of the branch gas passages (151) ranges from 0.5 mm to 3 mm.

9. The battery cell (1) according to any one of claims 1 to 8, wherein a plurality of electrode cores 400 are provided, the plurality of electrode cores (400) are arranged in sequence, the arrangement direction of the plurality of electrode cores (400) is consistent with a thickness direction of the electrode core (400), and each of the electrode cores (400) at least corresponds to one branch gas passage (151).

10. The battery cell (1) according to any one of claims 1 to 9, wherein the dimension of the electrode core (400) in the length direction of the second side wall (130) is L₁, and the maximum length of the first recess (140) and the plurality of second recesses (150) on the second side wall (130) is L₂, wherein L₁ and L₂ meet: 0.04≤L₂/L₁≤0.96.

11. The battery cell (1) according to claim 10, wherein L₁ and L₂ further meet: L₁≤500mm, and L₂≥20mm.

12. The battery cell (1) according to any one of claims 1 to 11, wherein the main gas passage (141) is located at a center of the electrode core (400) in the length direction of the second side wall (130);
the explosion-proof hole (160) is located at a center of the main gas passage (141); and
the explosion-proof hole (160) is located at a center of the electrode core (400) in a thickness direction of the electrode core (400).

13. The battery cell (1) according to any one of claims 1 to 12, further comprising:
an insulating film (500), the insulating film (500) being arranged in the inner cavity (110), and the insulating film (500) being located between at least a part of the inner cavity (110) and the explosion-proof valve (300).

14. The battery cell (1) according to any one of claims 1 to 13, wherein the terminal post (200) comprises a positive electrode terminal post (210) and a negative electrode terminal post (220), the housing (100) is an aluminum housing, the positive electrode terminal post (210) is electrically connected to the housing (100), and a difference between the voltage of the positive electrode terminal post (210) and the voltage of the housing (100) is not less than 0 V and not greater than 2.5 V

15. The battery cell (1) according to any one of claims 1 to 13, wherein the terminal post (200) comprises a positive electrode terminal post (210) and a negative electrode terminal post (220), the housing (100) is a steel housing, the negative electrode terminal post (220) is electrically connected to the housing (100), and a difference between the voltage of the housing (100) and the voltage of the negative electrode terminal post (220) is not less than 0 V and not greater than 2.5 V

16. The battery cell (1) according to any one of claims 1 to 15, wherein the housing (100) comprises:
a housing body (170), wherein the second side wall (130) and the inner cavity (110) are formed on the housing body (170), the housing body (170) is provided with an opening facing the second side wall (130), and the opening is in communication with the inner cavity (110); and
a housing cover (180), wherein the housing cover (180) is mounted to the housing body (170), the housing cover (180) covers the inner cavity (110), the first side wall (120) is formed on the housing cover (180), and the terminal post (200) is connected to the housing cover (180).

17. A battery pack (2), comprising:
a box (3); and
a battery cell (1) according to any one of claims 1 to 16, the battery cell (1) being mounted in the box (3), with the explosion-proof valve (300) facing a bottom wall of the box (3).

18. A vehicle (4), comprising a battery cell (1) according to any one of claims 1 to 16 or a battery pack (2) according to claim 17, with the first side wall (120) being located above the second side wall (130).
